# EUROPEAN PATENT SPECIFICATION

(11) **EP 1 151 579 B1**
(45) Date of publication and mention of the grant of the patent: **30.09.2009**
(21) Application number: 00910024.9
(22) Date of filing: 28.01.2000
(51) Int. Cl.: H04L 9/32

(54) **SELF-GENERATION OF CERTIFICATES USING A SECURE MICROPROCESSOR IN A DEVICE FOR TRANSFERRING DIGITAL INFORMATION**
SELBSTGENERIERUNG VON ZERTIFIKATEN UNTER VERWENDUNG EINES SICHEREN MIKROPROZESSORS IN EINER VORRICHTUNG ZUR DIGITALEN DATENÜBERTRAGUNG
GENERATION AUTOMATIQUE DE CERTIFICATS FAISANT APPEL A UN MICROPROCESSEUR DANS UN DISPOSITIF PERMETTANT DE TRANSFERER DES INFORMATIONS NUMERIQUES

(30) Priority: 29.01.1999 US 117788 P; 09.04.1999 US 128772 P
(43) Date of publication of application: 07.11.2001
(73) Proprietor: GENERAL INSTRUMENT CORPORATION, Horsham, Pennsylvania 19044 (US)
(72) Inventor: MEDVINSKY, Sasha, San Diego, CA 92129 (US); SPRUNK, Eric, J., Carlsbad, CA 92009 (US)
(74) Representative: Bohnenberger, Johannes
(86) International application number: PCT/US2000/002317
(87) International publication number: WO 2000/045241

(56) References cited:
- EP-A2- 0 328 232
- WO-A-98/10558
- US-A- 4 935 962
- US-A- 5 917 912
- US-A- 6 026 491
- US-A- 6 058 188
- CISCO: "Cisco Announces New cable Broadband access product to support integraded data, voice and video" INTERNET CITATION, [Online] 8 January 1999 (1999-01-08), XP002147934 Retrieved from the Internet: URL:HTTP://CIO.CISCO.COM/WARP/PUBLIC/146/P RESSROOM/1999/JAN99/10.HTML>
- NORTEL NETWORKS: "IP Telephony" INTERNET CITATION, [Online] 1998, XP002147949 Retrieved from the Internet: URL:http://www.cablenet.org/cn98/apps/nor/ t_teleph_col.pdf>> [retrieved on 1998]

## Description

### BACKGROUND OF THE INVENTION

This invention relates in general to secure data transfers in digital systems and more specifically to a device in such a digital system that has the ability to self-issue certificates in a secure manner.

Public key systems have become a very popular means for providing security in digital systems. Public Key Systems (PKS) have two different keys, one for encryption, or signing, and one for decryption, or verifying. This separation of keys has great security value in that the sign/decrypt function can be securely isolated from verify/encrypt functions, as is appropriate for the typical use of these keys. Public key systems are also known as asymmetric systems, or cryptosystems, as opposed to non-public key systems that are known as symmetric, or secret key, systems.

To send a message in a public key system, a sender obtains the receiver's public key. The sender uses the public key to encrypt a message. The encrypted message is then sent to the receiver. Since only the receiver has the corresponding private key of the public/private key pair, only the intended receiver can decrypt and view the encrypted message.

However, a problem arises in that the sender may not be sure that they have obtained the receiver's correct public key in the first place. For example, a fraudulent public key may have been provided under the guise of the receiver's public key. In order to prevent this, "certificates" are used to generate confidence in the legitimacy of a public key. A certificate is typically the information that is included along with a signed message, where the certificate includes the public key required to verify the signature on the message. The certificate is signed with the certifying authority's private key and can be verified by a recipient of the certificate by using the certifying authority's public key. Of course, the same problem of obtaining the known certifying authority's correct public key in the first place still exists. A sequence of certified public keys can be obtained from sources of progressively higher trust, where each preceding certificate's public key comes from a successively more trustworthy source. At some point, the user of a certificate's public key must be able to trust, or be assured that, the original public key for the chain of certificates does, indeed, come from the proper source and is valid.

The act of user authentication (verification of user identity) usually includes the verification of the user's certificate. Usually the certificate includes the identity of the sender, the identity of the certificate issuer, the sender's public key, the time period for which the certificate is valid, etc.

Sometimes it is necessary to update key pairs by sending new key pairs from one device to another. This procedure can benefit from being validated by certificates, but where the updating occurs frequently the inclusion of certificate processing can put a high processing burden on the participating systems. Also, certificates need to be generated, signed and transferred in order to minimize the effect that a "broken" or "stolen" private key could have on a system. The maintenance of security based on a public key scheme, certificates, authentication, etc., is referred to as a system's Public Key Infrastructure (PKI). An example of telecommunications systems where the implementation of a traditional PKI is problematic or prohibitive is in a large scale digital network, such as the Internet. Where the data being transferred is high bandwidth using many transactions of small size, the number of discrete exchanges of data, along with their corresponding encryption, decryption, authentication, etc., is extremely large. However, the need for security such as is provided by a PKI is also great, especially in applications such as telephony, or other secure data transfers such as banking, etc.

Telecommunications systems that are large and based around flexible protocols such as Internet Protocol (IP) typically use many servers, switches, routers and other devices for transferring data. Each device is usually a discrete box that can use a combination of hardware and software. Many such devices are located in diverse locations many miles apart. It is necessary not only to ensure that communication between the devices remains secure, but also that processing within each device is highly immune from security attacks.

Shorter keys are often useful because their security functions (i.e., encoding/encrypting or decoding/decrypting) require less time than longer keys. However, the level of security provided is less than with longer keys so the shorter keys and certificates need to be replaced more often. If the initial keys and certificates are installed by the unit (e.g. cable telephony adapter) manufacturer while the replacement keys and certificates are transferred from the network service provider, a "dual trust" hierarchy is created that is not as robust as a single trust approach.

Thus, it is desirable to provide a security system for use in telecommunications systems that handles certification efficiently.

### SUMMARY OF THE INVENTION

The present invention allows consumer communications devices such as an IP telephony adapter to self-generate public key pairs and certificates. This eliminates the need for such keys and certificates to be sent to the devices from an outside source so a single-trust approach can be maintained. In another embodiment, public key pairs may be generated by a server and delivered to the consumer device in an encrypted and signed message. The certificate for the delivered public key would still be generated inside the consumer device. A manufacturer-signed consumer device certificate for a large public key is installed into a device at the time of manufacture. The device only issues itself certificates (for a newly generated shorter key pair) based on a signed request from an external outside server. The device's self-issued certificates incorporate information obtained from the server in a profile. This allows control by the server over a device's self-issued certificates. In order to prevent tampering, and breaking, of the self-issued certificates, the certificate issuing process occurs within a secure microprocessor.

The invention discloses a method and apparatus as claimed.

### BRIEF DESCRIPTION OF THE DRAWINGS

Fig. 1 is a flowchart that describes the basic steps of the present invention;
Fig. 2A shows a portion of a telephony network 100 including a Cable Telephony Adapter; and
Fig. 2B shows an exemplary embodiment of the CTA.

### DESCRIPTION OF THE SPECIFIC EMBODIMENTS

The present invention is preferably included in a cable telephony system that is described in detail in the priority documents US Applications 60/117,788 and 60/128,772. Although specific reference is made to a cable telephony system, the invention is adaptable for use in virtually any telecommunications system that uses secured transactions.

### Cable Telephony Adapter

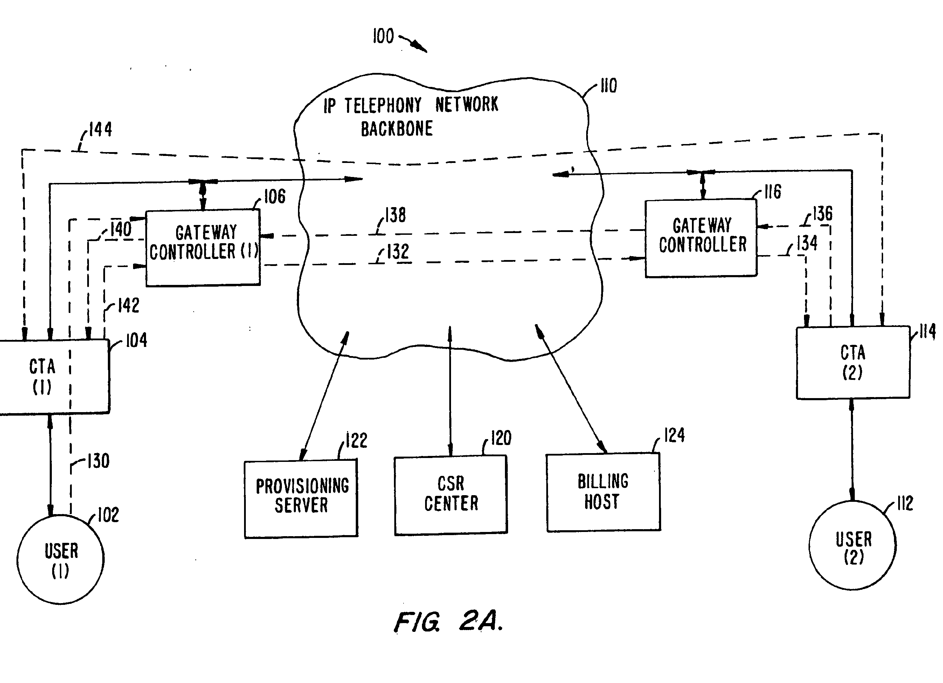

FIG. 2A shows a portion of an IP telephony network 100 constructed in accordance with the present invention. The network 100 includes a first user 102 coupled to a source CTA 104. The source CTA 104 is further coupled to a source gateway controller 106 and an IP telephony network backbone 110.

The network 100 also includes a second user 112 coupled to a destination CTA 114. The destination CTA 114 is further coupled to a destination gateway controller 116 and the IP telephony network backbone 110. In addition, the network 100 also includes a customer service representative (CSR) center 120, a provisioning server 122 and a billing host 124.

Each user of the network 100 goes through an initialization process to activate network service. For example, when the user 102 and associated CTA 104 are coupled to the network, a series of messages are exchanged between the CTA 104, the gateway controller 106 and the CSR 120. The messages provide for activation of telephony service for the user 102, establishment of account information and creation of encryption keys to be used by the CTA to encrypt and decrypt messages exchanged over the network. The billing host 124 is used to setup account information for each user and to bill for network usage. The provisioning server 122 is used to initialize and register CTA devices within a specific IP telephony network.

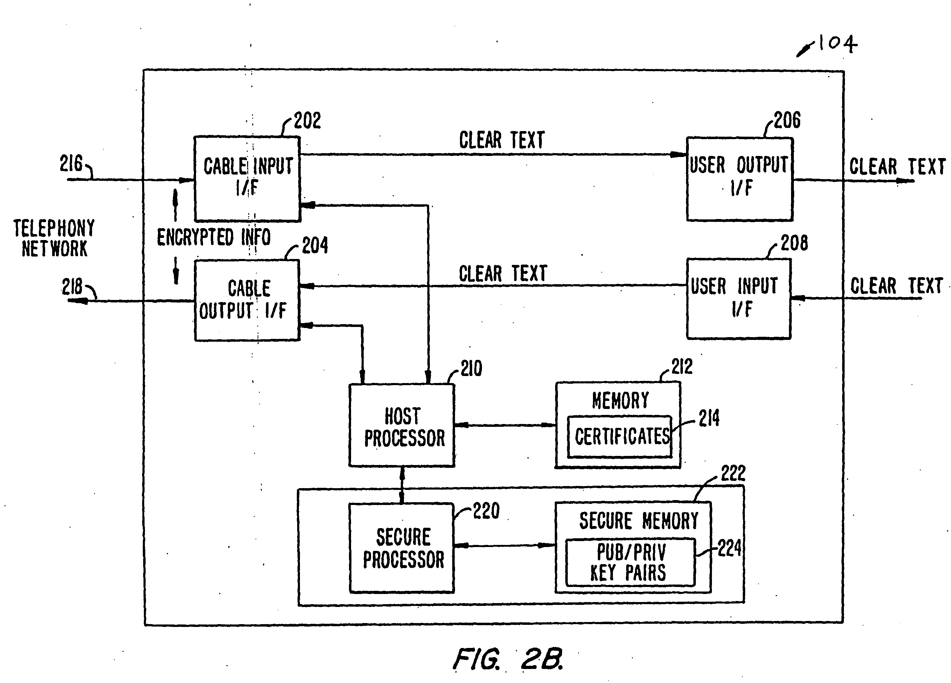

Fig. 2B shows an exemplary embodiment of the CTA 104 constructed in accordance with the present invention. The CTA 104 includes a cable input interface (I/F) 202, a cable output I/F 204, a user output I/F 206, a user input I/F 208, a host processor 210, a memory 212 and an additional secure processor 220 along with secure memory 222, used to protect public/private key pairs 224. Certificates 214 are stored in regular memory because they are signed and don't require additional protection.

The cable input I/F 202 is coupled to a cable telephony input 216. The cable output I/F 204 is coupled to a cable telephony output 218. The cable telephony input and output I/F couple the CTA 104 to a cable telephony network, such as by connecting to a cable modem (not shown) that is coupled to the cable telephony network. In another embodiment, the cable modem is included in the CTA so that the cable telephony network may be connected directly to the CTA.

The processor 210 couples to the cable input I/F 202 and the cable output I/F 204 to provide processing of information received and transmitted, respectively, on the telephony network. The line 216 carries secure encrypted and/or signed information which cannot be processed directly by the host processor, since it does not have access to cryptographic keys. The host processor has to pass on this information to the secure processor, which has access to the necessary keys to perform cryptographic operations. The connections between the cable I/F modules and the user I/f modules carry unencrypted information. The unencrypted information is commonly referred to as clear text, which extends back to the user. Similarly, when clear text user input needs to be encrypted and/or signed, this cannot be done directly by the host processor. It passes on the information to the secure processor that performs the cryptographic operations. This way, encrypted and/or signed data appears on line 218.

The certificates in 214 cryptographically bind each public key to an identity. The short, self-signed public key may be bound to either the device or user identity, while the longer public keys installed at the time of manufacture must be bound to the identity of the device (since the user identity is unknown at that time). The certificates are not protected in secure memory because they are already cryptographically protected with a digital signature.

### Self-Issuance of Certificates

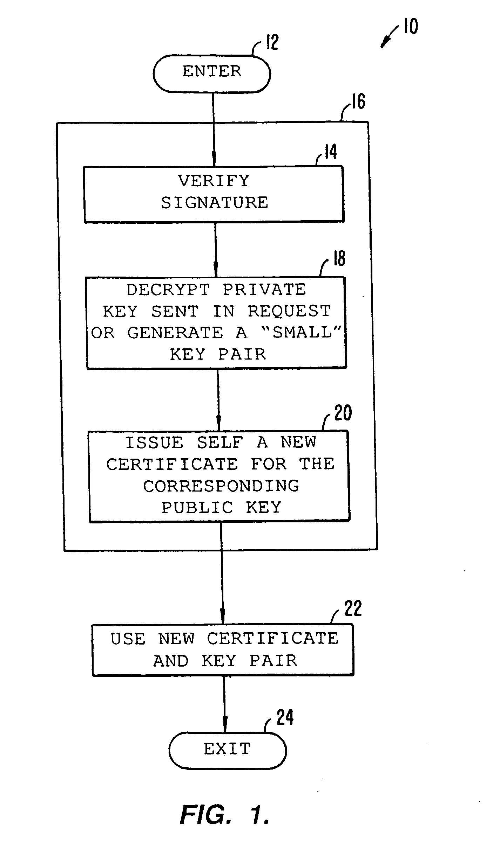

Fig. 1 is a flowchart that describes the basic steps of the present invention.

In Fig. 1, flowchart 10 is entered during provisioning when the CTA gets a request from a server to issue itself a certificate for a new public key. For example, the preferred embodiment uses a 768-bit RSA key pair as a 'small' key pair with a self-issued certificate. The CTA is provided with a large 2048-bit RSA public/private certificate signing key pair and a corresponding public key certificate upon manufacture of the CTA at a factory. A large key-exchange public/private key pair (e.g., 2048-bit RSA key pair) and a corresponding certificate are also installed into the CTA at the factory.

Steps 14, 18 and 20 are performed by the secure microprocessor in the CTA. Thus, all of the steps necessary to issue a certificate for a small public key and certificate are performed inside the secure microprocessor. At step 14, the request from the server is authenticated by verifying the signature. In the preferred embodiment, in step 18 a "short" (e.g. 768-bit) RSA key pair is generated inside the secure microprocessor. In another embodiment, step 18 results in the decryption of the "short" RSA private key sent in the certificate request. At step 20, the CTA issues itself a new certificate for the corresponding public key that is also included in the server request. This new certificate is signed with the CTA's large certificate-signing key. The parameters in the new certificate (e.g., validity time) are copied from the certificate request sent by the server and are used in the self-issued certificate. Table I shows a list of different parameters in the profile of the server request. Table II lists the parameters that are copied over to the certificate from the profile in the request.

**TABLE I**

| |
|---|
| • 768-bit RSA Private Key (optional - used if the device does not generate a key pair, itself) |
| • 768-bit Public Key (optional - used if the device does not generate a key pair, itself) |
| • Key/Certificate Validity Period (start and stop times) |
| • Network ID |
| • CTA ID |
| • Signature Algorithm (e.g., RSA over SHA-1) |
| • Signature Over Certificate Request |
| • Network Certificate (2048-bit) |
| • Network Equipment Manufacturer Certificate |

**TABLE II**

| |
|---|
| • Public Key (optional - used if the device does not generate a key pair, itself) |
| • Key/Certificate Validity Period (start and stop times) |
| • Network (or Service Provider) ID |
| • CTA (or user) ID |

After creation of the new certificate, and corresponding key pair, the CTA can use them to either authenticate itself or for secure key exchanges. Because the new certificate is issued inside a secure microprocessor, a hacker can't tamper with the certificate-issuing process. The certificate is based on the information in the server certificate request. Also, it is difficult for a hacker to imitate a server certificate request as the request must be signed with the server's private key.

Note that variations from the specific embodiments discussed here are possible. For example, different key sizes and public key technology (e.g., RSA, Elliptic Curve, El Gamal, etc.) may be used. Thus, although the invention has been presented with respect to specific embodiments thereof, these embodiments are merely illustrative, and not restrictive, of the invention, the scope of which is to be determined solely by the appended claims.

## Claims

1. A method for providing self-issuing certificates (214) in a device (104, 114) in a telecommunications system (100), the device having a certificate-signing key, the method comprising:
receiving, from an external source, a request to generate a new certificate, wherein the request includes a public key, wherein the public key is smaller in size than the certificate-signing key;
using a secure microprocessor (220) to generate a new certificate for the public key;
signing the certificate with the certificate-signing key; and
using the new certificate in data transfers.

2. The method of claim 1, wherein the request includes a validity time, the method further comprising:
including the validity time in the new certificate.

3. The method of claim 1, further comprising:
wherein the step of receiving includes a substep of receiving a certificate request to generate a new certificate, wherein the certificate request includes a signed profile of at least a portion of parameters to appear in the new certificate;
signing the new certificate; and
using the new certificate in data transfers.

4. The method of claim 3, further comprising:
generating a new public key pair.

5. The method of claim 1, wherein the request includes an encrypted private key.

6. The method of claim 5, further comprising decrypting the private key.

7. The method of claim 6, wherein the steps of signing the new certificate and decrypting the private key are performed inside the secute microprocessor.

8. The method of claim 6, wherein the steps of signing the new certificate and decrypting the private key are performed inside the secure microprocessor as a single combined operation.

9. The method of claim 3, wherein the new certificate is signed by the device using a certificate signing key installed at the time of manufacture of the device.

10. An apparatus for providing self-issuing certificates (214), the apparatus comprising:
a certificate-signing key;
a cable input interface (202) for receiving a request to generate a new certificate, wherein the request includes a public key, wherein the public key is smaller in size than the certificate-signing key;
a secure microprocessor (220) for generating a new certificate using the public key and for signing the certificate with the certificate-signing key; and
processing circuitry for using the new certificate in data transfers.

## Patentansprüche

1. Verfahren zum Bereitstellen von selbstausstellenden Zertifikaten (214) in einer Vorrichtung (104, 114) in einem Telekommunikationssystem (100), wobei die Vorrichtung einen Zertifikat-Signierungsschlüssel hat, wobei das Verfahren folgende Schritte aufweist:
Empfangen, von einer externen Quelle, einer Anforderung zum Erzeugen eines neuen Zertifikats, wobei die Anforderung einen öffentlichen Schlüssel aufweist, wobei der öffentliche Schlüssel eine geringere Größe als der Zertifikat-Signierungsschlüssel hat;
Verwenden eines sicheren Mikroprozessors (220) zum Erzeugen eines neuen Zertifikats für den öffentlichen Schlüssel;
Signieren des Zertifikats mit dem Zertifikat-Signierungsschlüssel; und
Verwenden des neuen Zertifikats in Datenübertragungen.

2. Verfahren nach Anspruch 1, wobei die Anforderung eine Gültigkeitsdauer aufweist, wobei das Verfahren ferner aufweist:
Einfügen der Gültigkeitsdauer in das neue Zertifikat.

3. Verfahren nach Anspruch 1, wobei ferner:
der Schritt des Empfangens einen Unterschritt des Empfangens einer Zertifikatanforderung zum Erzeugen eines neuen Zertifikats aufweist, wobei die Zertifikatanforderung ein signiertes Profil von wenigstens einem Teil von Parametern aufweist, die in dem neuen Zertifikat erscheinen sollen;
Signieren des neuen Zertifikats; und
Verwenden des neuen Zertifikats in Datenübertragungen.

4. Verfahren nach Anspruch 3, das ferner aufweist:
Erzeugen eines neuen öffentlichen Schlüsselpaars.

5. Verfahren nach Anspruch 1, wobei die Anforderung einen verschlüsselten privaten Schlüssel aufweist.

6. Verfahren nach Anspruch 5, das ferner das Entschlüsseln des privaten Schlüssels aufweist.

7. Verfahren nach Anspruch 6, wobei die Schritte des Signierens des neuen Zertifikats und des Entschlüsselns des privaten Schlüssels in dem sicheren Mikroprozessor ausgeführt werden.

8. Verfahren nach Anspruch 6, wobei die Schritte des Signierens des neuen Zertifikats und des Entschlüsselns des privaten Schlüssels in dem sicheren Mikroprozessor als eine einzige kombinierte Operation ausgeführt werden.

9. Verfahren nach Anspruch 3, wobei das neue Zertifikat von der Vorrichtung signiert wird unter Verwendung eines Zertifikat-Signierungsschlüssels, der zum Herstellungszeitpunkt der Vorrichtung installiert wurde.

10. Vorrichtung zum Bereitstellen von selbsterzeugenden Zertifikaten (214), wobei die Vorrichtung aufweist:
einen Zertifikat-Signierungsschlüssel;
eine Kabeleingangsschnittstelle (202) zum Empfangen einer Anforderung zum Erzeugen eines neuen Zertifikats, wobei die Anforderung einen öffentlichen Schlüssel aufweist, wobei der öffentliche Schlüssel eine geringere Größe als der Zertifikat-Signierungsschlüssel hat;
einen sicheren Mikroprozessor (220) zum Erzeugen eines neuen Zertifikats unter Verwendung des öffentlichen Schlüssels und zum Signieren des Zertifikats mit dem Zertifikat-Signierungsschlüssel; und
Verarbeitungsschaltungen zum Verwenden des neuen Zertifikats in Datenübertragungen.

## Revendications

1. Procédé pour fournir des certificats se générant automatiquement (214) dans un dispositif (104, 114) dans un système de télécommunication (100), le dispositif ayant une clé de signature de certificat, le procédé comprenant les étapes consistant à :
recevoir, à partir d'une source externe, une demande pour générer un nouveau certificat, la demande comprenant une clé publique, et la clé publique étant plus petite en taille que la clé de signature de certificat ;
utiliser un microprocesseur sécurisé (220) pour générer un nouveau certificat pour la clé publique ;
signer le certificat avec la clé de signature de certificat ; et
utiliser le nouveau certificat dans des transferts de données.

2. Procédé selon la revendication 1, dans lequel la demande comprend un date de validité, le procédé comprenant en outre l'étape consistant à :
inclure la date de validité dans le nouveau certificat.

3. Procédé selon la revendication 1, comprenant en outre les étapes consistant à :
dans lequel l'étape de réception comprend une sous-étape de réception d'une demande de certificat pour générer un nouveau certificat, la demande de certificat comprenant un profil signé d'au moins une partie des paramètres devant apparaître dans le nouveau certificat ;
signer le nouveau certificat ; et
utiliser le nouveau certificat dans des transferts de données.

4. Procédé selon la revendication 3, comprenant en outre l'étape consistant à :
générer une nouvelle paire de clés publiques.

5. Procédé selon la revendication 1, dans lequel la demande comprend une clé privée cryptée.

6. Procédé selon la revendication 5, comprenant en outre le décryptage de la clé privée.

7. Procédé selon la revendication 6, dans lequel les étapes de signature du nouveau certificat et de décryptage de la clé privée sont effectuées dans le microprocesseur sécurisé.

8. Procédé selon la revendication 6, dans lequel les étapes de signature du nouveau certificat et de décryptage de la clé privée sont effectuées dans le microprocesseur sécurisé sous la forme d'une seule opération combinée.

9. Procédé selon la revendication 3, dans lequel le nouveau certificat est signé par le dispositif en utilisant une clé de signature de certificat installée au moment de la fabrication du dispositif.

10. Appareil pour fournir des certificats se générant automatiquement (214), l'appareil comprenant :
une clé de signature de certificat ;
une interface d'entrée de câble (202) destinée à recevoir une demande de génération de nouveau certificat, la demande comprenant une clé publique, et la clé publique étant plus petite en taille que la clé de signature de certificat ;
un microprocesseur sécurisé (220) pour générer un nouveau certificat en utilisant la clé publique et pour signer le certificat avec la clé de signature de certificat ; et
des circuits de traitement pour utiliser le nouveau certificat dans des transferts de données.
